# EUROPEAN PATENT APPLICATION

(11) **EP 1 394 984 A1**
(43) Date of publication of application: **03.03.2004**
(21) Application number: 03300074.6
(22) Date of filing: 25.07.2003
(51) Int. Cl.: H04L 12/24

(54) **Method and apparatus for network resource utilization assessment**

(30) Priority: 05.08.2002 US 211318
(71) Applicant: Alcatel Canada Inc., Kanata, Ontario K2K 2E6 (CA)
(72) Inventor: BLOCH, Gerald, K2K 2L9, OTTAWA (CA); MCFARLANE, Bradley Kenneth, K2B 8K3, OTTAWA (CA); PIETRARU, Daniel Constantin, K2E 7E8, OTTAWA (CA)
(74) Representative: Feray, Valérie

(57) **Abstract**

Methods and apparatus for network resource utilization assessment are presented. The apparatus includes an information warehousing layer for storing a coherent network model including network node generated reporting information and derived reporting information. The coherent network model is generated by a network modeler and the derived information is generated by a network engineering analyzer. The apparatus further includes a presentation layer enabling support for extensive network resource utilization assessments. An equipment trend analyzer module provides equipment utilization tracking in communications network over time. Advantages are derived from a network resource utilization assessment enabling model based network engineering analysis to attain improved network resources utilization efficiencies.

## Description

### Held of the invention

The invention relates to managing communications networks, and in particular to assessing resource utilization.

### Background of the invention

Communications services are provisioned over communications networks adhering to a variety of information exchange disciplines. Communications networks comprise network nodes and interconnecting links.

Legacy network nodes originally were optimized for switching multiplexing. Operations management functions such as provisioning of connections in communications networks was provided centrally via the use of associated network management systems.

Legacy communications network nodes provided only control interfaces in support of control information exchange with the associated network management system. Legacy network management systems typically ran at maximum capacity just managing configuration and control information. The control capacity of such an arrangement and therefore the size of the corresponding communications network was limited to a few thousand communications network nodes.

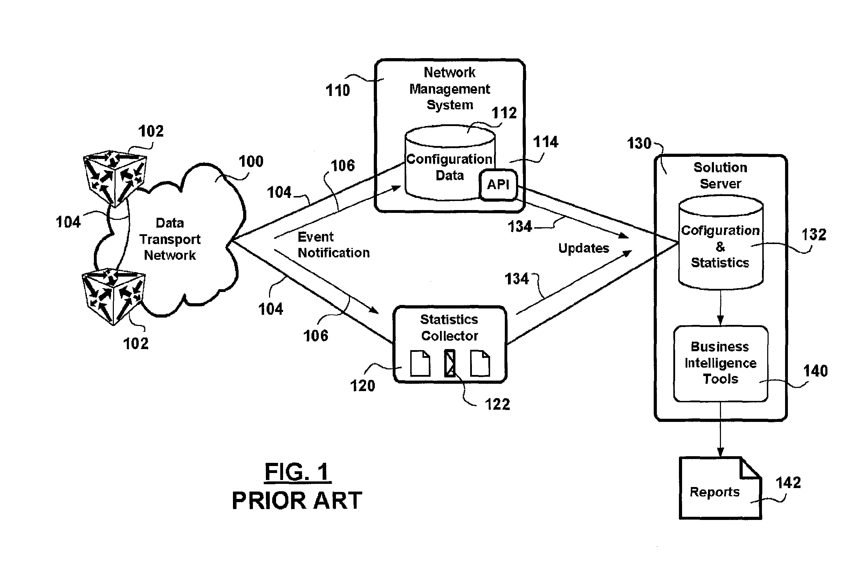

In accordance with typical equipment deployment shown in FIG. 1, a network management system 110 and a statistics collector 120 receive event notifications 106 from the network nodes 102 in a managed communications network 100. Interconnecting links 104 provide signaling and content transport. The event notifications 106 generated by network nodes 102 are typically polled for by the network management system 110 and/ or the statistics collectors 120. The event notifications 106 may also be received on a streaming basis from the network nodes 102.

The network management system 110 has a database 112 for storing notification information specifically pertaining to equipment provisioning and control. The network management system 110 is typically able to report summary information such as: the number of nodes, the number of active nodes, the number of inactive nodes, etc. Network level provisioning includes enabling an operator to automatically set up connectivity in the network by selecting only the service endpoints and the network management system finds a suitable route. Service provisioning defines a network state, alarm information signaled deviations from the provisioned network state. At best, network management systems attempted to restore the provisioned network state.

The statistics collector 120 stores raw counter values relating to performance, utilization, operational status, etc., of selected network resources. Typically statistics information held by the statistics collector 120 is used for billing, accounting purposes, and performance management.

The drive to expand communications networks, fueled by an increasing demand for communications services, has led to the necessity of adding more and more capable network nodes and interconnecting links.

Attempts have been made at extending the capacity of network management systems 110 in providing functionality additional to fault management and provisioning, while the increase in the size of managed networks utilizes processing capacities of network management systems 110 to a high degree.

Prior art solutions have tended to focus on isolated network management aspects and typically attempt to provide integrated solutions. These approaches result in in-depth solutions for specific communication network management aspects and typically do not address interrelationships between diverse reporting information.

It is typical for communications networks to employ a mix of vendor equipment as an infrastructure investment risk leveraging technique and/ or to respond to different requirements at different parts of the communications network.

An exemplary prior art operational performance analysis software, known as the Resolve^{TM} by Orchestream Plc., resides on a dedicated solution server 130 having a database 132 for storing specific configuration data and statistics received, via updates 134, from the network management system 110 and/ or the statistics collector 120. The particular configuration data and statistics pertain only to network performance. Software business intelligence tools 140 executing on the server 130 are used to analyze the configuration data and statistics to generate reports 142 used for network performance and service management. The solution attempts to address network performance and service management for entire communications networks. Such prior art solution is both adequate for, and limited to, network performance and service management.

In exchanging information between the network management system 110 / the statistics collector 120, and the solution server 130; such solutions make use of: an Application Programming Interface (API) 114 provided on the network management system 110, and filtering techniques 122 at the statistics collector 120 respectively. The use of the API 114 and filtering 122 introduces a large amount of operational overhead to both the network management system 110 and the statistics collector 120.

The updates 134 are typically transmitted as generated in response to received event notifications 106. The generation of updates 134 represent processing overheads for both the network management system 110 and the statistics collector 120.

More reporting information about the network must be collected and organized in a manner that enables analysts to perform network resource utilization assessments.

Reducing network operating costs is important to network providers. There therefore is a need to improve the analysis of communications networks, in an attempt to operate communications networks at improved efficiencies while reducing costs.

### Summary of the invention

In accordance with an aspect of the invention, a system for analyzing a communications network is presented. The analysis system includes a network modeler, an information warehousing layer and a presentation layer. The network modeler is adapted to combine reporting information received into a coherent network model of the communications network. The information warehousing layer stores the network model. The presentation layer enables the presentation of any reporting information held in the network model based on selection criteria.

In accordance with another aspect of the invention, the analysis system further includes a network engineering analyzer operable to augment the network model with derived information generated by processing reporting information associated with the network model.

In accordance with a further aspect of the invention, the reporting means further includes visualization means for generating, in accordance with selection criteria, network maps representative of the network model.

In accordance with a further aspect of the invention, the analysis system provides trend analysis of network resource utilization in the communications network. The network modeler is further adapted to receive time variant reporting information - the network model comprising combined time variant reporting information. The information warehousing layer stores the time variant reporting information. And, the presentation layer further generates trending reports from the network model.

In accordance with a further aspect of the invention, a group of rules define at least one network resource utilization threshold used to generate at least one advisory in accordance with at least one of current and preferred communications network operation practices.

In accordance with a further aspect of the invention, a method of analyzing a communications network is provided. Received reporting information is combined into a network model of the communications network. And, the network model is stored in a network model database. The method further includes steps of: generating derived information from the network model, and augmenting the network model with the derived information.

In accordance with a further aspect of the invention, the received time variant reporting information is combined into a time variant model of the communications network providing resource utilization tracking over time.

In accordance with a further aspect of the invention, the method further includes a step of generating, from the network model, a combination of reports, graphs, analog indicators, and network maps. The combination of reports, graphs and network maps pertain to a combination of network management aspects including: performance, usage, availability, inventory synchronization and data transport control.

In accordance with yet another aspect of the invention, in generating the combination of reports, graphs, analog indicators, and network maps the method further includes generating a combination of time variant reports, graphs and network maps tracking resource utilization trends.

Advantages are derived from a network resource utilization assessment enabling model based network engineering analysis to attain improved network resources utilization efficiencies.

### Brief description of the drawings

The features and advantages of the invention will become more apparent from the following detailed description of the preferred embodiment with reference to the attached diagrams wherein:
FIG. 1 is a schematic diagram showing elements implementing network management in accordance with prior art solutions; and
FIG. 2 is a schematic diagram showing, in accordance with an exemplary embodiment of the invention, elements providing communications network resource utilization assessment.

It will be noted that in the attached diagrams like features bear similar labels.

### Detailed description of the embodiments

Network management systems 110 were initially developed for real-time mission critical operations management, and not for network modeling and analysis. Although some network management systems 110 may delve into network modeling and analysis, such implementations suffer from an extensive operational overhead incurred as a result. Minimization of network management system operational overheads are sought.

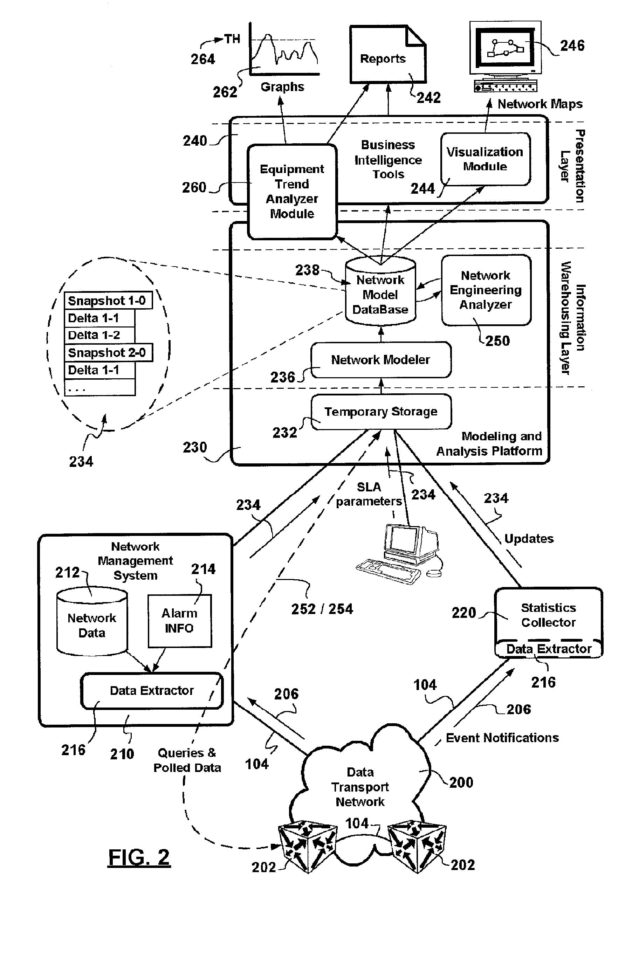

FIG. 2 is a schematic diagram showing, in accordance with an exemplary embodiment of the invention, elements providing communications network resource utilization assessment.

Recent developments in the field of communications have led to intelligent communications networks 200 in which intelligent network nodes 202 exchange control information to effect service provisioning functionality including connectivity and connection control. For example, intelligent network nodes 202 detect faults, and attempt to provide fault management such as providing re-routing of throughput onto protection bandwidth without being instructed to do so by network management systems 110. Therefore selected provisioning functionality has moved away from network management systems 110 and into communications networks 200.

The advent of intelligent data network nodes brings about reporting interfaces and extended reporting information. The mission critical legacy network management systems 110, by being optimized for operations management and control, typically do not make use of the available extended reporting information.

At the same time reporting information is being generated by network nodes 202 to better assess data transport resource utilization but such resource utilization information is spread over all the network nodes making it difficult to process it. Typically, the network management systems 110 do not make use of the extended reporting information. The role of network management systems 110 however has not been diminished, rather these advances have enabled the associated realms of control of network management systems 110 to be extended over tens of thousands of network nodes 202. Network capacity has scaled up with the intelligent network nodes providing an enhanced degree of long sought scalability.

With extended reporting information being available from the network nodes 202, a range of network modeling and analysis functions ranging from network observation, analysis, optimization, and design have become both possible and necessary. The analysis functions facilitate the optimization of the communications network 200 to run in accordance with preferred operational characteristics.

In order to improve network management efficiency, network resource utilization assessment functionality may be moved onto a modeling and analysis platform 230.

An extensive support for network resource utilization assessment is sought and requires the gathering, conveyance, warehousing, and processing of all reporting information available. The goal is surmountable as current communications networks 200 benefit from high data transport bandwidths. Reductions in operating costs are sought via optimizing the ratio of an amount of gathered information to operational overheads incurred by the network management system 110 and the statistics collector 120.

In accordance with an exemplary embodiment of the invention, a modified network management system 210 further includes a data extractor 216 for extracting raw reporting information maintained by the network management system 110. The reporting information maintained by the network management system 110 typically includes, but is not limited to configuration information and auxiliary data. For example, the auxiliary data may also include, but is not limited to: alarm and network partitioning information.

In accordance with the exemplary embodiment of the invention, reporting information including raw performance statistics information is gathered from the statistics collector 210 minimizing operational overheads incurred therein.

Aside from the reporting information available via the network management system 210 and/ or the statistics collector 220, the modeling and analysis platform 230 may query 252 (intelligent) network nodes 202 for all additional reporting information. The queries 252 may use network element management functions of the network management system 210 and the data extractor 216 to implement access to the additionally raw reporting information. Making use of the network element management functions of the network management system 210 as opposed to the advanced programming interface 114 reduces processing overheads incurred by the network management system 210. Generally, the queries 252 generate polled data 254.

The raw reporting information is conveyed from the network management system 210 and the statistics collector 220 to the modeling and analysis platform 230.

The modeling and analysis platform 230 may also receive service information 234 such as service level agreement (SLA) guarantees.

The modeling and analysis platform 230 receives the raw reporting information in temporary storage 232. A network modeler 236 imports the reporting information from the temporary store 232 and organizes it into a coherent model of the communications network. The network modeler 236 is provided with knowledge regarding the processing of raw reporting information into the coherent network model. The body of knowledge used in organizing the raw reporting information may include, but is not limited to, a body of rules.

Exemplary network modeler 236 functionality in organizing the raw reporting information into the coherent network model, includes, but is not limited to, correlating: equipment configuration information received via the network management system 210, facility information, performance statistics information received via the statistics collector 220, alarm information, control plane protocol information, node synchronization information, etc. For example, knowledge held by the network modeler 236 enables the recognition and correlation of the reporting information regarding alarms X, Y, and Z; associated with a data network node A; having occurred at time t1, t2, and t3; under throughput conditions U1, U2, and U3; respectively. In accordance with the exemplary embodiment of the invention, warehousing all available reporting information makes a large variety of correlations possible. The resulting coherent network model is stored in a network model database 238. The network model database 238 may include but is not limited to a relational database.

In accordance the exemplary embodiment of the invention, the network model may be further modified by additional derived information generated by a network engineering analyzer 250 associated with the analysis and modeling platform 230. Exemplary derived information includes, but is not limited to, availability assessment generated by the network engineering analyzer 250 from equipment-up and equipment-down reported instances. Availability information provides support for resource audit implementation. The network engineering analyzer 250 is provided with knowledge enabling derivation of information about the network model and may also operate in accordance with a group of rules.

In accordance with the preferred embodiment of the invention, the presented solution does not concentrate on specific aspects of network management or statistics collection, rather the solution attempts to gather and consolidate all available reported information in a reporting information warehousing layer. The preferred embodiment further attempts to make the consolidated reporting information available to an analyst via a presentation layer. For this reason the presented solution is said to be information centric by centralizing access to reporting information.

Business intelligence tools 240 define the presentation layer and access the network model stored in the database 238 to present the correlated reporting information to an analyst. Visualization tools 244 provide support for visual representations of the coherent network model providing for example network maps 246, graphs, analog indicators, etc. The invention is not limited to a particular group business intelligence tools 240. The presentation layer preferably operates in accordance with an associated group of analyst definable directives/ rules enabling the analyst to tailor the output provided via the presentation layer to particular network resource utilization analysis tasks.

The information centric solution presented, provides support for generating ad-hoc reports regarding the communications network 200, limited only by the combinatorial variety of reporting information held in the database 238. The more varied reporting information available, the more extensive the variety of reports that can be generated. This flexible reporting capability enables analysts to tailor the output provided via the presentation layer to provide answers to one-off questions about the communications network 200.

For example: it is realized that simply adding network capacity does not necessarily provide desired results of increasing transport bandwidth. Network engineering is necessary and requires access to extensive reporting information. Specifically, for the present example, the solution presented herein enables an analyst to perform equipment utilization trend analysis to provide support for making decisions on whether or not to expand network capacity. In particular equipment utilization trend analysis also enables an analyst to determine when additional network capacity should be added. Support for an equipment trend analysis is provided by storage of historical reporting information.

Another example where benefits are derived from the flexible reporting includes synchronization of a communications network to ensure that the participating communications network nodes are properly consolidated to ensure that reporting information is not lost. Yet another example includes analysis of the control plane protocol connections to ensure that command and control can be effected over managed communications nodes in a communications network.

In accordance with the exemplary embodiment of the invention, an equipment trend analyzer 260 module is provided. The equipment trend analyzer 260 accesses historical reporting information regarding the network model to perform equipment trend analysis. The resulting output may include, but is not limited to, graphs 262, reports 242, analog indicators (not shown), etc. The equipment trend analyzer 260 is capable of reporting on nodes, cards, ports, etc. filtered according selected parameters and combinations thereof, e.g. by service agreement, by utilization threshold, etc. For example, network operators may use 60% peak resource utilization as a threshold 264 in determining that the capacity of a particular tracked resource should be increased. The equipment trend analyzer 260 allows an analyst to track the utilization of any piece of equipment, service, facility and/ or resource in the communications network 200, whether monitoring received reporting information or derived information, to determine if associated thresholds 264 have been exceeded, and consequently whether more capacity should be added.

Although the invention has been described with respect to equipment trend analysis, it is understood that resource utilization trend analysis may be extended to performance trend analysis enabled by the extensive amount of reporting information available via the information warehousing layer.

A group of analyst editable rules may be defined to enable the business tools 240 to generate advisories in accordance with current and/ or best communications network operation practices.

An exemplary method of updating the coherent network model with reporting information includes receiving and processing of successive snapshots of reporting information and statistics information. Although receiving periodic snapshot updates 234 of reporting information provides for conveyance efficiencies therefor, it has a disadvantage of being less current especially between snapshot updates 234 and probably having a lesser relevance to real-time provisioning and fault management solutions. However, some degree of stability in the reported information is desirable in using the network model for planning activities such as network design and engineering functions.

Using snapshot updates 234 instead of streaming updates 134, has the further advantage of utilizing, network management system processing bandwidth more efficiently especially in gathering large amounts of reporting information 210 therefrom.

Although it is preferable that snapshot updates of the reporting information are periodically provided (for some reporting information) to the analysis modeling server 230, an analyst could also request (refresh) updates 234 of such reported information on demand.

Queries 252 may also be issued on a regimented schedule to reduce transport bandwidth in conveying the polled data 254. Query sessions may be performed about the same time that the snapshot updates 234 are received.

In support of equipment trend analysis, the modeling and analysis platform 230 tracks in the network model database 238 successive synchronization snapshot and differential (delta) update information. Each delta update represents the difference between the snapshot update at the time of the delta update and the previous snapshot update. That is, instead of replacing the information in the network model database 238 with each new snapshot update 236, changes to the network model are stored. For example, synchronization snapshots are received on a daily basis while delta updates are more frequent. This method of receiving and organizing synchronization snapshot and delta updates in the network model provides support for performance/ equipment trend analysis. Synchronization snapshots provide network model resynchronization as event notifications may be missed from time to time.

In accordance with the exemplary embodiment of the invention, bandwidth requirements in conveying the reporting information are further reduced by having the data extractor 216 generate the delta updates 234 at both the network management system 210 and the statistics collector 220. Using snapshot and delta updates enables the collection of more reporting information than would be possible using streaming data methods at the same or improved transport bandwidth efficiencies.

In accordance with another exemplary implementation, it is also possible, and desirable, for the updates 234 to be provided in a streaming manner. Streaming updates 234 provide support for time critical network resource utilization assessment.

The methods and apparatus presented herein include support for comprehensive network modeling further providing support for an improved representation of communications network operations. This improved representation supports network engineering functions directed to operating communications networks more efficiently to reduce the cost of ownership.

The solution enables a proactive approach to network capacity evolution. Equipment trend analysis provides a time variant view of a communications network. This capability is particularly useful for determining whether and when to add more network capacity. Informed decisions with respect to capacity evolution can be made based on a balance of throughput capacity and maintaining quality of service guarantees. By making this proactive decision based on received reporting and derived information, the network operator can avoid the cost of unnecessary additional capacity while ensuring that utilization does not reach a level that would be detrimental to network operation otherwise remedied only by reactive actions.

The embodiments presented are exemplary only and persons skilled in the art would appreciate that variations to the above described embodiments may be made without departing from the spirit of the invention. The scope of the invention is solely defined by the appended claims.

## Claims

1. A system for analyzing a communications network, comprising:
a. a network modeler adapted to process reporting information received into a network model of the communications network;
b. an information warehousing layer for storing the network model; and
c. a presentation layer for presenting, dependent on selection criteria, selected reporting information regarding the network model.

2. A system for analyzing a communications network as claimed in claim 1, further comprising a first group of rules used by the network modeler to process the received reporting information into the network model.

3. A system for analyzing a communications network as claimed in claim 1, further comprising a network engineering analyzer operable to augment the network model with derived information generated by processing reporting information associated with the network model.

4. A system for analyzing a communications network as claimed in claim 3, further comprising a second group of rules is used by the network engineering analyzer to derive information from the reporting information associated with the network model.

5. A system for analyzing a communications network as claimed in claim 1, wherein the presentation layer further includes visualization means for generating, in accordance with selection criteria, network maps representative of the network model.

6. A system for analyzing a communications network as claimed in claim 1, wherein the received reporting information comprises at least one of a reporting information update and polled data.

7. A system for analyzing a communications network as claimed in claim 6, wherein the reporting information update comprises a one of: a snapshot update, an synchronization snapshot update, a delta update, an on-demand update, and a streaming update.

8. A system for analyzing a communications network as claimed in claim 1, wherein, the analysis system is adapted to receive reporting information from at least one of a network management system, a statistics collector and at least one network node.

9. A system for analyzing a communications network as claimed in claim 1, wherein the received reporting information comprises a combination of network configuration data, performance statistics data, alarm status information, service related information, control plane information, node synchronization information, and event notifications.

10. A system for trend analysis of network resource utilization in the communications network as claimed in claim 1, wherein:
a. the network modeler is further adapted to store time variant reporting information, the network model comprising processed time variant reporting information;
b. the information warehousing layer storing a time variant network model; and
c. the presentation layer further being operable to present selected time variant reporting information regarding the time variant network model in support of trend analysis.

11. A system for trend analysis of network resource utilization as claimed in claim 10, further comprising an equipment trend analyzer.

12. A system for trend analysis of network resource utilization as claimed in claim 11, further comprising a third group of rules used by the equipment trend analyzer module to perform resource utilization trend analysis.

13. A system for trend analysis of network resource utilization as claimed in claim 12, wherein the third group of rules define at least one network resource utilization threshold used to generate at least one advisory in accordance with at least one of current and preferred communications network operation practices.

14. A system for trend analysis of network resource utilization as claimed in claim 10, wherein the presentation of selected time variant reporting information include time variant graphs.

15. A system for analyzing a communications network as claimed in claim 1 used for network resource utilization assessment.

16. A method of analyzing a communications network comprising the steps of:
a. receiving reporting information in accordance with a reporting information gathering regimen;
b. combining the received reporting information into a network model of the communications network by forming correlations between received reporting information;
c. storing the network model in a network model database;
d. generating derived information from the network model; and
e. augmenting the network model with the derived information.

17. A method of analyzing resource utilization in a communications network as claimed in claim 16, wherein receiving reporting information further comprises receiving time variant reporting information.

18. A method of analyzing resource utilization in a communications network as claimed in claim 17, wherein combining reporting information further comprises combining the received time variant reporting information into a time variant model of the communications network providing resource utilization tracking over time.

19. A method of analyzing resource utilization in a communications network as claimed in claim 16, further comprising a step of generating, from the network model, a combination of reports, graphs, analog indicators, and network maps, the combination of reports, graphs, analog indicators, and network maps pertaining to a combination of network management aspects comprising: performance, usage, availability, inventory, configuration, synchronization and data transport control.

20. A method of analyzing resource utilization in a communications network as claimed in claim 19, wherein generating the combination of reports, graphs, analog indicators, and network maps, the method further comprises generating a combination of time variant reports, graphs, analog indicators, and network maps tracking resource utilization trends.

21. A method of analyzing resource utilization in a communications network as claimed in claim 19, wherein generating the combination of reports, graphs, analog indicators, and network maps, the method further comprises generating ad-hoc reports graphs, analog indicators, and network maps.
